Europäisches Patentamt

European Patent Office

Office européen des brevets

(11) Publication number: 0 319 491
A1

# EUROPEAN PATENT APPLICATION

(21) Application number: 88830514.1

(22) Date of filing: 01.12.88

(51) Int. Cl.⁴: G 01 W 1/00
G 08 C 17/00

(30) Priority: 04.12.87 IT 956687

(43) Date of publication of application:
07.06.89 Bulletin 89/23

(84) Designated Contracting States:
AT BE CH DE ES FR GB GR LI NL SE

(71) Applicant: OFFICINE PANERAI S.P.A.
Piazza G. Ferraris, 2
I-50131 Firenze (IT)

(72) Inventor: Gentili, Guido Biffi
Via dei Cappuccini No.15
Firenze (IT)

Zavattaro, Franco
Via G.Romita No.33
Casale Monferrato Alessandria (IT)

Corsi, Sandro
Via Gordigiani No.38
Firenze (IT)

(74) Representative: Mannucci, Gianfranco, Dott.-Ing.
Ufficio Tecnico Ing. A. Mannucci Via della Scala 4
I-50123 Firenze (IT)

(54) Automatic system for phonic radio-transmission of meteorologic data in response to a coded inquiry by radio.

(57) To feed meteorologic information to aircrafts equipped with usual phonic radio-receiving and radio-transmitting unit (1), a ground located apparatus is provided comprising: a radio receiver (7) operating at a certain frequency, able to receive a coded signal from the usual on-board phonic radio transmitter (1); a decoder (9) which transforms the signal to make it operative for the sets or groups located downstream thereof; a vocal synthesizer (10) able to be driven by the decoded signal; a phonic radio-transmitter (12) for the data generated by the vocal synthesizer (10) at the frequency of the on-board radio receiver equipment (1); and an automatic meteorological observation post (14, 14A) whose numeric data are transformed into phonic data by said vocal synthesizer and sent out.

Description

## AUTOMATIC SYSTEM FOR PHONIC RADIO-TRANSMISSION OF METEOROLOGIC DATA IN RESPONSE TO A CODED INQUIRY BY RADIO

The invention refers to the possibility of providing, in automatic and clearly audible way, meteorologic information coming from meteorological observation posts of standard type located on the ground in the vicinity of unattended airports or helyports, by utilizing the normal transceiver units available on board of an aircraft.

At present, information of this kind can be supplied to aircrafts which are about to perform the approach or the landing, only through the ground located operators in charge of the air traffic control, or through complex automatic responders which require the use of special and expensive on-board equipment.

On the other hand, the above information results extremely useful, and sometimes indispensable for the safety of flight and landing manoeuvres, just in the conditions that require the use of normally unattended air/helyports such as for rescue operations in case of natural or artificial disasters, rescue and transport of wounded people, provisioning of supplies and medicines.

The invention refers to an apparatus to be coupled to a normal meteorologic station located in the vicinity of an air/helyport, allowing the automatic re-transmission of meteorologic data, in the form of synthesized vocal messages, to the approaching aircrafts that require the above mentioned information.

These and other purposes will be evident to the skilled in the art by the reading of the following description.

The object of the invention is an apparatus for supplying meteorologic data to aircrafts equipped with usual phonic radio-receiving and radio-transmitting unit, which comprises, on the ground: a radio receiver operating at a certain frequency, able to receive a coded signal from the usual on-board phonic radio transmitter; a decoder which transforms the signal to make it operative for the sets or groups located downstream thereof; a vocal synthesizer able to be driven by the decoded signal; a phonic radio transmitter for the data generated by the vocal synthesizer in order to transmit at the frequency of the on-board radio receiver equipment; and associated to said synthesizer an automatic meteorological observation post, whose numeric data are transformed into phonic data and sent out.

Practically, to the vocal synthesizer there are combined: a dedicated vocabulary; and a message address generator which receives numeric data from the meteorological observation post.

The coded signal, emitted on the audio channel of the on-board transmitter, can be generated by a series of carrier pulses obtained by subsequent actuations of the transmission button; all this takes place at a predetermined frequency as used also for phonic transmissions.

It is not excluded that, in order to carry out a coding, a dedicated set is provided, operating on the audio channel in parallel with the microphone as well.

Advantageously, the transmission of the phonic message of the meteorologic information is timed.

It is evident that the system is intended above all for aeronautical usage, as it allows acquisition of localized meteorologic data relevant, for example, to air- and helyports lacking in watched that is garrisoned meteorologic stations, directly by the approaching aircraft and through the simple coded inquiry obtained by utilizing radio-transmission and reception facilities that the aircrafts are already systematically equipped with.

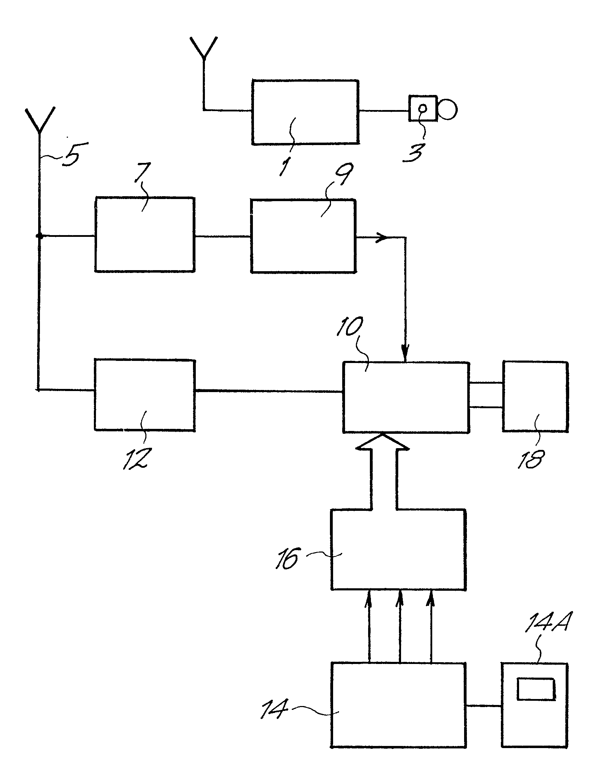

The invention will be better understood by following the description and the attached drawing, which shows a practical, non limitative exemplification of the same invention. The drawing shows a very simplified diagram of the apparatus according to the invention and its operation.

In the drawing, numeral 1 generically indicates an on-board transceiver set, with a switch in the form of a transmission button coupled to the microphone 3. Numeral 5 indicates a ground antenna which makes part of the apparatus according to the invention. To said radio-transmission antenna 5, a radio-receiver 7 is combined , which is tuned on a predetermined frequency among those available, for the communications between the aircraft and the ground, and followed by a decoder 9 operating on the audio channel usually intended for the reception of phonic signals.

This operative section comprises also a vocal synthesizer 10 that receives meteorologic data mostly obtained in form of numeric signals and transforms them in vocal information which is fed to a transmitter 12, syntonized on the channel predisposed for the reception of the message and connected to the antenna 5, to allow the transmission of the same message to the on-board apparatus 1.

More specifically, the vocal synthesizer 10 is combined to a (automatic) meteorological observation post 14 which provides temperature, pressure, wind and other meteorologic signals mostly in numeric form; meteorological posts of this type are already known and generally intended for supplying meteorologic parameter data on a display 14A, which is read by the operators of the garrisoned meteorologic stations, and which data are transmitted by the operators (on request) to the aircrafts. As for as the transmission in presence of a unattended station is concerned, these numeral output data, of the meteorological observation post are fed to a message address generator, generally indicated by 16, which processes and supplies data to the vocal synthesizer 10; the latter, in turn, is associated to a vocabulary 18 being capable of supplying phonic messages according to the data received from generator 16, so that the vocal synthesizer transforms the received numerical data in phonic data which are fed to transmitter 12 and transmitted by the latter to the on-board receiver 1.

Accordingly, the operation of the system involves: a request through the usual on-board audio channel, made by a simple coded emission which may be, e.g. a predetermined series of carrier pulses, such series being obtained, e.g. by subsequent actuations of the transmission button of microphone 3; any other coded emission system may also be used. Receiver 7 transfers the received coded signal to decoder 9, which transforms the request signal by means of a suitable electronics of known type. On the other hand, the meteorological observation post 14 supplies systematically and cyclically meteorologic data to synthesizer 10, which is able to transform the message addresses obtained from generator 16 having the vocabulary 18 at its disposal. As a consequence of the correct decoding of the request signal, the vocal synthesizer 10 performs the conversion of the data systematically received from the meteorological post into phonic messages, which are fed to transmitter 12 and then to radio-receiver 1 (on-board) which makes part of the normal on-board equipment for radio reception and radio-transmission.

The apparatus, therefore, is able to automatically supply, without requiring the presence of a garrisoned meteorological station and in direct phonic connection with the normal on-board radiophonic set, the meteorologic data supplied in real time via the meteorological observation post. The data are requested and acquired by the approaching aircraft by making use only of the radio units already existing on board and thus with no need for particular equipments and using such units only for a short time and on personal voluntary request. The channel on which the meteo data response is obtained following a radiophonic inquiry, is occupied only on request and only for the time necessary to the data transmission, as the transmission of the message deriving from the signals of the meteorological observation post is advantageously obtained in a timed way to ensure the complete transmission of all the data of the meteorologic message but without useless repetitions which would cause a useless utilization of the on-board radio-transceiver system.

## Claims

1. An apparatus for supplying meteorologic data to aircrafts equipped with normal phonic radio-receiving and radio-transmitting unit (1), characterized in that it comprises, on the ground: a radio-receiver (7) receiving at a predetermined frequency, able to receive a coded signal from the usual on-board phonic radio-transmitter (1); a decoder (9) which transforms the signal to make it operative for the sets or groups located downstream thereof; a vocal synthesizer (10) which can be driven by the decoded signal; a phonic radio-transmitter (12) for transmitting the data generated by the vocal synthesizer (10) at the frequency of the on-board radio-receiving equipment (1); and associated to said vocal synthesizer (10), an automatic meteorological observation post (14, 14A), whose numeric data are transformed into phonic data and transmitted out.

2. Apparatus according to the preceding claim, characterized in that to the vocal synthetizer (10) there are combined: a dedicated vocabulary (18); and a message addresses generator (16), which receives numeric data from the meteorological observation post (14, 14A).

3. Apparatus according to the preceding claims, characterized in that the coded signal, emitted on the audio channel of the on-board transmitter (1), is generated by a series of carrier pulses, obtained through subsequent actuations of the transmission button; all at a predetermined frequency, also used in phonic transmission.

4. Apparatus according to claim 1, characterized in that in order to carry out a coding, a dedicated unit is provided operating always on the audio channel in parallel with the microphone.

5. Apparatus according to the preceding claims, characterized in that the transmission of the phonic message of the meteorologic information is timed.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 050 020 (ARPINO) <br> * Page 2, line 7 - page 3, line 61; page 3, lines 119-128 * | 1-3,5 | G 01 W 1/00 <br> G 08 C 17/00 |
| A | ----- | 4 | |

|  | TECHNICAL FIELDS SEARCHED (Int. Cl.4) |
|---|---|
|  | H 04 M <br> G 08 C <br> G 01 W |

The present search report has been drawn up for all claims

| Place of search | Date of completion of the search | Examiner |
|---|---|---|
| THE HAGUE | 13-03-1989 | MIKKELSEN C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document. but published on, or after the filing date
D : document cited in the application
L : document cited for other reasons

             

& : member of the same patent family, corresponding document

EPO FORM 1503 03.82 (P0401)